# EUROPEAN PATENT APPLICATION

(11) **EP 2 881 910 A1**
(43) Date of publication of application: **10.06.2015**
(21) Application number: 14188684.6
(22) Date of filing: 13.10.2014
(51) Int. Cl.: G06Q 50/00, H04L 12/58

(54) **Indicating user availability for communication**

(30) Priority: 05.12.2013 US 201314098335; 23.05.2014 WO PCT/US2014/039262
(71) Applicant: Facebook, Inc., Menlo Park, CA 94025 (US)
(72) Inventor: Garcia III, David Harry, Menlo Park, CA California 94025 (US); Endres, Raymond, Menlo Park, CA California 94025 (US); Bobde, Nikhil, Menlo Park, CA California 94025 (US)
(74) Representative: Schröer, Gernot H.

(57) **Abstract**

In particular embodiments, a computing device accesses data associated with a first user of a social-networking system. Based at least in part on the data, the computing device determines a current availability of the first user to communicate with a second user of the social-networking system in substantially real time. The availability of the first user is determined based at least in part on a reachability of the first user and a willingness to communicate of the first user. The computing device provides for display to the second user an indication of the current availability of the first user as determined.

## Description

### TECHNICAL FIELD

This disclosure generally relates to communications between users of a social-networking system.

### BACKGROUND

A social-networking system, which may include a social-networking website, may enable its users (such as persons or organizations) to interact with it and with each other through it. The social-networking system may, with input from a user, create and store in the social-networking system a user profile associated with the user. The user profile may include demographic information, communication-channel information, and information on personal interests of the user. The social-networking system may also, with input from a user, create and store a record of relationships of the user with other users of the social-networking system, as well as provide services (e.g., wall posts, photo-sharing, event organization, messaging, games, or advertisements) to facilitate social interaction between or among users.

The social-networking system may send over one or more networks content or messages related to its services to a mobile or other computing device of a user. A user may also install software applications on a mobile or other computing device of the user for accessing a user profile of the user and other data within the social-networking system. The social-networking system may generate a personalized set of content objects to display to a user, such as a newsfeed of aggregated stories of other users connected to the user.

A mobile computing device-such as a smartphone, tablet computer, or laptop computer-may include functionality for determining its location, direction, or orientation, such as a GPS receiver, compass, gyroscope, or accelerometer. Such a device may also include functionality for wireless communication, such as BLUETOOTH communication, near-field communication (NFC), or infrared (IR) communication or communication with a wireless local area network (WLAN) or cellular-telephone network. Such a device may also include one or more cameras, scanners, touchscreens, microphones, or speakers. Mobile computing devices may also execute software applications, such as games, web browsers, or social-networking applications. With social-networking applications, users may connect, communicate, and share information with other users in their social networks.

### SUMMARY OF PARTICULAR EMBODIMENTS

In particular embodiments, the current availability of a first user of a social-networking system to communicate in substantially real time with a second user of the social-networking system may be determined, and an indication of the first user's availability may be provided for display to the second user (e.g. in a user interface of a messaging application associated with the social-networking system). The availability of the first user to communicate with the second user may be determined based on the reachability of the first user as well as the willingness of the first user to communicate (generally, and specifically with the second user). The indication of the availability of the first user may be displayed to the second user as an icon with accompanying text (e.g. in the user interface of the messaging application).

In particular embodiments, the reachability of the first user may be determined by accessing data associated with the first user including, for example, connectivity to the social-networking system of one or more devices associated with the first user, the types of one or more devices associated with the first user, the proximity of the first user to one or more devices associated with the first user, or characteristics or capabilities of one or more devices associated with the first user.

In particular embodiments, the willingness to communicate of the first user may be determined by accessing data associated with the first user including, for example, a state of one or more devices associated with the first user, a current time of day, a location of the first user,
the conversation history of the first user, or an explicit signal or indication provided by the first user regarding willingness to communicate. Additionally, the willingness to communicate of the first user may be adjusted based on the relationship between the first user and the second user, an affinity coefficient calculated between the first user and the second user, the conversation history between the first user and the second user, or commonalities between the first user and the second user.

The embodiments disclosed above are only examples, and the scope of this disclosure is not limited to them. Particular embodiments may include all, some, or none of the components, elements, features, functions, operations, or steps of the embodiments disclosed above.

Embodiments according to the invention are in particular disclosed in the attached claims directed to a method, a storage medium and a system, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims.

In an embodiment of the invention, a method comprises:
by a computing device, accessing data associated with a first user of a social-networking system and stored in a social-graph database of the social-networking system;
by the computing device, based at least in part on the data, determining a current availability of the first user to communicate with a second user of the social-networking system in substantially real time, wherein the availability of the first user is determined based at least in part on a reachability of the first user and a willingness to communicate of the first user;
wherein the reachability of the first user is determined based on a substantially real time gathering of information from a device of the first user, which can be stored in the social-graph database;
wherein the willingness to communicate of the first user is determined based on a pattern detection using historical data from the device of the first user and/or previous behavior of the first user stored in the social-graph database and could be overwritten by a user-set and/or application-set flag and/or an explicit signal provided by the first user; and
by the computing device, providing for display to the second user an indication of the current availability of the first user as determined.

In a further embodiment of the invention, a method comprises:
by a computing device, accessing data associated with a first user of a social-networking system;
by the computing device, based at least in part on the data, determining a current availability of the first user to communicate with a second user of the social-networking system in substantially real time, wherein the availability of the first user is determined based at least in part on a reachability of the first user and a willingness to communicate of the first user; and
by the computing device, providing for display to the second user an indication of the current availability of the first user as determined.

The willingness to communicate of the first user can be determined with respect to the second user.

The reachability of the first user can be determined based at least in part on one or more of the following:
connectivity to the social-networking system of one or more devices associated with the first user;
types of one or more devices associated with the first user;
proximity of the first user to one or more devices associated with the first user; or
characteristics or capabilities of one or more devices associated with the first user.

The willingness to communicate of the first user can be determined based at least in part on one or more of the following:
a state of one or more devices associated with the first user;
a current time of day;
a location of the first user;
a conversation history of the first user;
types of one or more applications used by the first user; or an explicit signal provided by the first user.

The willingness to communicate of the first user can be adjusted based at least in part on one or more of the following:
a relationship between the first user and the second user;
an affinity coefficient calculated between the first user and the second user;
a conversation history between the first user and the second user; or commonalities between the first user and the second user.

The availability of the first user can be determined using machine learning feedback based at least in part on a conversation history of the first user.

The indication of the current availability of the first user can comprise an icon with accompanying text.

In an embodiment of the invention, which can be claimed as well, one or more computer-readable non-transitory storage media embodying software that is operable when executed to:
access data associated with a first user of a social-networking system;
based at least in part on the data, determine a current availability of the first user to communicate with a second user of the social-networking system in substantially real time, wherein the availability of the first user is determined based at least in part on a reachability of the first user and a willingness to communicate of the first user; and
provide for display to the second user an indication of the current availability of the first user as determined.

The reachability of the first user can be determined based on a substantially real time gathering of information from a device of the first user, which can be stored in the social-graph database.

The willingness to communicate of the first user can be determined based on a pattern detection using historical data from the device of the first user and/or previous behavior of the first user stored in the social-graph database and could be overwritten by a user-set and/or application-set flag and/or an explicit signal provided by the first user.

In an embodiment of the invention, which can be claimed as well, a system comprises:
one or more processors; and
a memory coupled to the processors comprising instructions executable by the processors, the processors being operable when executing the instructions to:
   access data associated with a first user of a social-networking system;
   based at least in part on the data, determine a current availability of the first user to communicate with a second user of the social-networking system in substantially real time, wherein the availability of the first user is determined based at least in part on a reachability of the first user and a willingness to communicate of the first user; and
   provide for display to the second user an indication of the current availability of the first user as determined.

In a further embodiment of the invention, one or more computer-readable non-transitory storage media embody software that is operable when executed to perform a method according to the invention or any of the above mentioned embodiments.

In a further embodiment of the invention, a system comprises: one or more processors; and a memory coupled to the processors comprising instructions executable by the processors, the processors operable when executing the instructions to perform a method according to the invention or any of the above mentioned embodiments.

### BRIEF DESCRIPTION OF THE DRAWINGS

- FIG. 1: illustrates an example network environment associated with a social-networking system.
- FIG. 2: illustrates an example social graph.
- FIG. 3: illustrates an example user interface of a messaging application associated with a social-networking system.
- FIG. 4: illustrates an example method for indicating user availability for communication.
- FIG. 5: illustrates an example computer system.

### DESCRIPTION OF EXAMPLE EMBODIMENTS

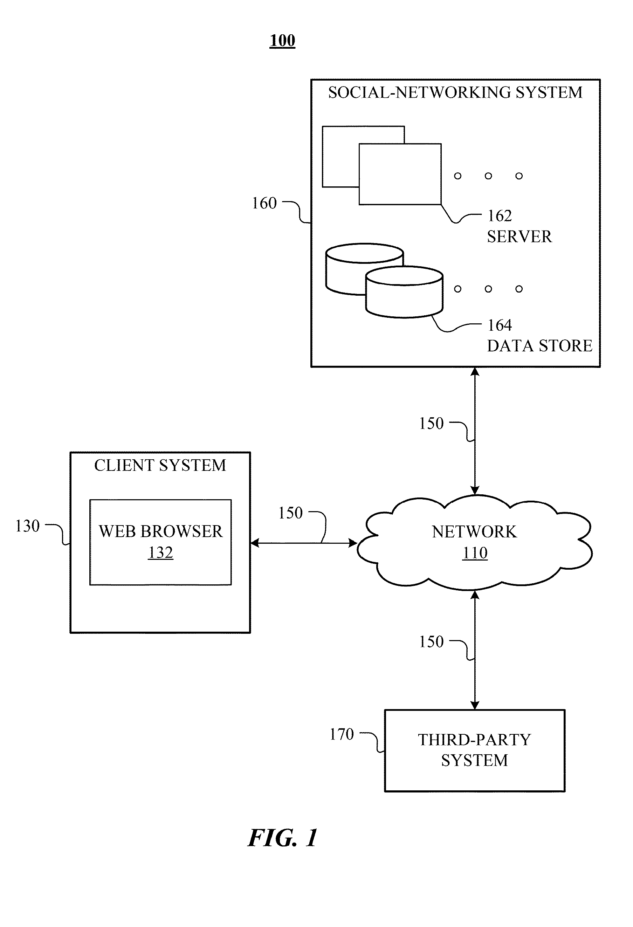

FIG. 1 illustrates an example network environment 100 associated with a social-networking system. Network environment 100 includes a client system 130, a social-networking system 160, and a third-party system 170 connected to each other by a network 110. Although FIG. 1 illustrates a particular arrangement of client system 130, social-networking system 160, third-party system 170, and network 110, this disclosure contemplates any suitable arrangement of client system 130, social-networking system 160, third-party system 170, and network 110. As an example and not by way of limitation, two or more of client system 130, social-networking system 160, and third-party system 170 may be connected to each other directly, bypassing network 110. As another example, two or more of client system 130, social-networking system 160, and third-party system 170 may be physically or logically co-located with each other in whole or in part. Moreover, although FIG. 1 illustrates a particular number of client systems 130, social-networking systems 160, third-party systems 170, and networks 110, this disclosure contemplates any suitable number of client systems 130, social-networking systems 160, third-party systems 170, and networks 110. As an example and not by way of limitation, network environment 100 may include multiple client system 130, social-networking systems 160, third-party systems 170, and networks 110.

This disclosure contemplates any suitable network 110. As an example and not by way of limitation, one or more portions of network 110 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 110 may include one or more networks 110.

Links 150 may connect client system 130, social-networking system 160, and third-party system 170 to communication network 110 or to each other. This disclosure contemplates any suitable links 150. In particular embodiments, one or more links 150 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links 150 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout network environment 100. One or more first links 150 may differ in one or more respects from one or more second links 150.

In particular embodiments, client system 130 may be an electronic device including hardware, software, or embedded logic components or a combination of two or more such components and capable of carrying out the appropriate functionalities implemented or supported by client system 130. As an example and not by way of limitation, a client system 130 may include a computer system such as a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client systems 130. A client system 130 may enable a network user at client system 130 to access network 110. A client system 130 may enable its user to communicate with other users at other client systems 130.

In particular embodiments, client system 130 may include a web browser 132, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client system 130 may enter a Uniform Resource Locator (URL) or other address directing the web browser 132 to a particular server (such as server 162, or a server associated with a third-party system 170), and the web browser 132 may generate a Hyper Text Transfer Protocol (HTTP) request and communicate the HTTP request to server. The server may accept the HTTP request and communicate to client system 130 one or more Hyper Text Markup Language (HTML) files responsive to the HTTP request. Client system 130 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, social-networking system 160 may be a network-addressable computing system that can host an online social network. Social-networking system 160 may generate, store, receive, and send social-networking data, such as, for example, user-profile data, concept-profile data, social-graph information, or other suitable data related to the online social network. Social-networking system 160 may be accessed by the other components of network environment 100 either directly or via network 110. In particular embodiments, social-networking system 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular embodiments, each server 162 may include hardware, software, or embedded logic components or a combination of two or more such components for carrying out the appropriate functionalities implemented or supported by server 162. In particular embodiments, social-networking system 164 may include one or more data stores 164. Data stores 164 may be used to store various types of information. In particular embodiments, the information stored in data stores 164 may be organized according to specific data structures. In particular embodiments, each data store 164 may be a relational, columnar, correlation, or other suitable database. Although this disclosure describes or illustrates particular types of databases, this disclosure contemplates any suitable types of databases. Particular embodiments may provide interfaces that enable a client system 130, a social-networking system 160, or a third-party system 170 to manage, retrieve, modify, add, or delete, the information stored in data store 164.

In particular embodiments, social-networking system 160 may store one or more social graphs in one or more data stores 164. In particular embodiments, a social graph may include multiple nodes-which may include multiple user nodes (each corresponding to a particular user) or multiple concept nodes (each corresponding to a particular concept)-and multiple edges connecting the nodes. Social-networking system 160 may provide users of the online social network the ability to communicate and interact with other users. In particular embodiments, users may join the online social network via social-networking system 160 and then add connections (e.g., relationships) to a number of other users of social-networking system 160 whom they want to be connected to. Herein, the term "friend" may refer to any other user of social-networking system 160 with whom a user has formed a connection, association, or relationship via social-networking system 160.

In particular embodiments, social-networking system 160 may provide users with the ability to take actions on various types of items or objects, supported by social-networking system 160. As an example and not by way of limitation, the items and objects may include groups or social networks to which users of social-networking system 160 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 160 or by an external system of third-party system 170, which is separate from social-networking system 160 and coupled to social-networking system 160 via a network 110.

In particular embodiments, social-networking system 160 may be capable of linking a variety of entities. As an example and not by way of limitation, social-networking system 160 may enable users to interact with each other as well as receive content from third-party systems 170 or other entities, or to allow users to interact with these entities through an application programming interfaces (API) or other communication channels.

In particular embodiments, a third-party system 170 may include one or more types of servers, one or more data stores, one or more interfaces, including but not limited to APIs, one or more web services, one or more content sources, one or more networks, or any other suitable components, e.g., that servers may communicate with. A third-party system 170 may be operated by a different entity from an entity operating social-networking system 160. In particular embodiments, however, social-networking system 160 and third-party systems 170 may operate in conjunction with each other to provide social-networking services to users of social-networking system 160 or third-party systems 170. In this sense, social-networking system 160 may provide a platform, or backbone, which other systems, such as third-party systems 170, may use to provide social-networking services and functionality to users across the Internet.

In particular embodiments, a third-party system 170 may include a third-party content object provider. A third-party content object provider may include one or more sources of content objects, which may be communicated to a client system 130. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, social-networking system 160 also includes user-generated content objects, which may enhance a user's interactions with social-networking system 160. User-generated content may include anything a user can add, upload, send, or "post" to social-networking system 160. As an example and not by way of limitation, a user communicates posts to social-networking system 160 from a client system 130. Posts may include data such as status updates or other textual data, location information, photos, videos, links, music or other similar data or media. Content may also be added to social-networking system 160 by a third-party through a "communication channel," such as a newsfeed or stream.

In particular embodiments, social-networking system 160 may include a variety of servers, sub-systems, programs, modules, logs, and data stores. In particular embodiments, social-networking system 160 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 160 may also include suitable components such as network interfaces, security mechanisms, load balancers, failover servers, management-and-network-operations consoles, other suitable components, or any suitable combination thereof. In particular embodiments, social-networking system 160 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for link-ing social-networking system 160 to one or more client systems 130 or one or more third-party system 170 via network 110. The web server may include a mail server or other messaging functionality for receiving and routing messages between social-networking system 160 and one or more client systems 130. An API-request server may allow a third-party system 170 to access information from social-networking system 160 by calling one or more APIs. An action logger may be used to receive communications from a web server about a user's actions on or off social-networking system 160. In conjunction with the action log, a third-party-content-object log may be maintained of user exposures to third-party-content objects. A notification controller may provide information regarding content objects to a client system 130. Information may be pushed to a client system 130 as notifications, or information may be pulled from client system 130 responsive to a request received from client system 130. Authorization servers may be used to enforce one or more privacy settings of the users of social-networking system 160. A privacy setting of a user determines how particular information associated with a user can be shared. The authorization server may allow users to opt in to or opt out of having their actions logged by social-networking system 160 or shared with other systems (e.g., third-party system 170), such as, for example, by setting appropriate privacy settings. Third-party-content-object stores may be used to store content objects received from third parties, such as a third-party system 170. Location stores may be used for storing location information received from client systems 130 associated with users. Advertisement-pricing modules may combine social information, the current time, location information, or other suitable information to provide relevant advertisements, in the form of notifications, to a user.

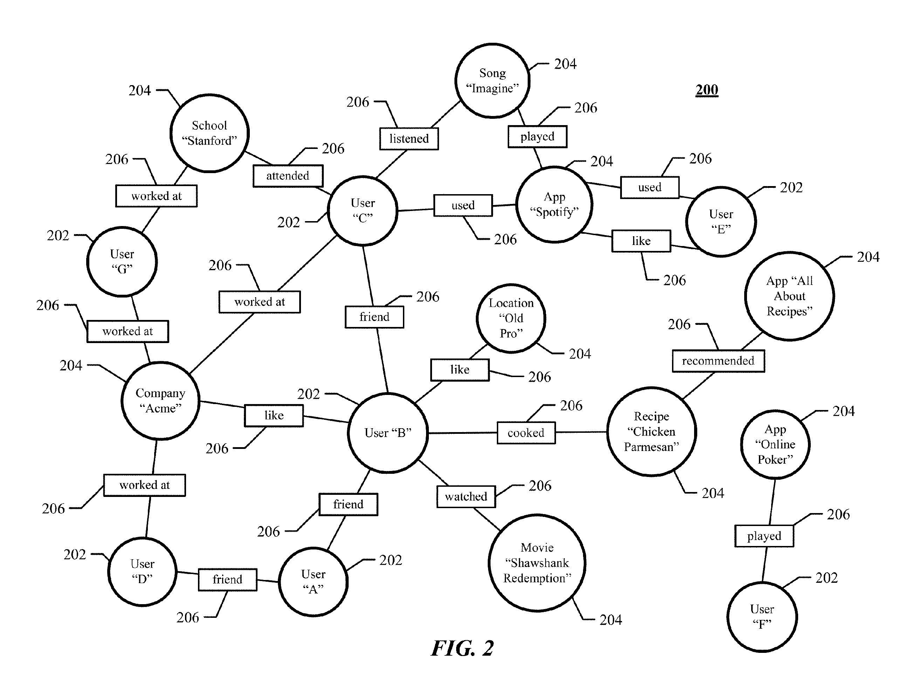

FIG. 2 illustrates example social graph 200. In particular embodiments, social-networking system 160 may store one or more social graphs 200 in one or more data stores. In particular embodiments, social graph 200 may include multiple nodes-which may include multiple user nodes 202 or multiple concept nodes 204-and multiple edges 206 connecting the nodes. Example social graph 200 illustrated in FIG. 2 is shown, for didactic purposes, in a two-dimensional visual map representation. In particular embodiments, a social-networking system 160, client system 130, or third-party system 170 may access social graph 200 and related social-graph information for suitable applications. The nodes and edges of social graph 200 may be stored as data objects, for example, in a data store (such as a social-graph database). Such a data store may include one or more searchable or queryable indexes of nodes or edges of social graph 200.

In particular embodiments, a user node 202 may correspond to a user of social-networking system 160. As an example and not by way of limitation, a user may be an individual (human user), an entity (e.g., an enterprise, business, or third-party application), or a group (e.g., of individuals or entities) that interacts or communicates with or over social-networking system 160. In particular embodiments, when a user registers for an account with social-networking system 160, social-networking system 160 may create a user node 202 corresponding to the user, and store the user node 202 in one or more data stores. Users and user nodes 202 described herein may, where appropriate, refer to registered users and user nodes 202 associated with registered users. In addition or as an alternative, users and user nodes 202 described herein may, where appropriate, refer to users that have not registered with social-networking system 160. In particular embodiments, a user node 202 may be associated with information provided by a user or information gathered by various systems, including social-networking system 160. As an example and not by way of limitation, a user may provide his or her name, profile picture, contact information, birth date, sex, marital status, family status, employment, education background, preferences, interests, or other demographic information. In particular embodiments, a user node 202 may be associated with one or more data objects corresponding to information associated with a user. In particular embodiments, a user node 202 may correspond to one or more webpages.

In particular embodiments, a concept node 204 may correspond to a concept. As an example and not by way of limitation, a concept may correspond to a place (such as, for example, a movie theater, restaurant, landmark, or city); a website (such as, for example, a website associated with social-network system 160 or a third-party website associated with a web-application server); an entity (such as, for example, a person, business, group, sports team, or celebrity); a resource (such as, for example, an audio file, video file, digital photo, text file, structured document, or application) which may be located within social-networking system 160 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 204 may be associated with information of a concept provided by a user or information gathered by various systems, including social-networking system 160. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 204 may be associated with one or more data objects corresponding to information associated with concept node 204. In particular embodiments, a concept node 204 may correspond to one or more webpages.

In particular embodiments, a node in social graph 200 may represent or be represented by a webpage (which may be referred to as a "profile page"). Profile pages may be hosted by or accessible to social-networking system 160. Profile pages may also be hosted on third-party websites associated with a third-party server 170. As an example and not by way of limitation, a profile page corresponding to a particular external webpage may be the particular external webpage and the profile page may correspond to a particular concept node 204. Profile pages may be viewable by all or a selected subset of other users. As an example and not by way of limitation, a user node 202 may have a corresponding user-profile page in which the corresponding user may add content, make declarations, or otherwise express himself or herself. As another example and not by way of limitation, a concept node 204 may have a corresponding concept-profile page in which one or more users may add content, make declarations, or express themselves, particularly in relation to the concept corresponding to concept node 204.

In particular embodiments, a concept node 204 may represent a third-party webpage or resource hosted by a third-party system 170. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check in," "eat," "recommend," or another suitable action or activity. A user viewing the third-party webpage may perform an action by selecting one of the icons (e.g., "eat"), causing a client system 130 to send to social-networking system 160 a message indicating the user's action. In response to the message, social-networking system 160 may create an edge (e.g., an "eat" edge) between a user node 202 corresponding to the user and a concept node 204 corresponding to the third-party webpage or resource and store edge 206 in one or more data stores.

In particular embodiments, a pair of nodes in social graph 200 may be connected to each other by one or more edges 206. An edge 206 connecting a pair of nodes may represent a relationship between the pair of nodes. In particular embodiments, an edge 206 may include or represent one or more data objects or attributes corresponding to the relationship between a pair of nodes. As an example and not by way of limitation, a first user may indicate that a second user is a "friend" of the first user. In response to this indication, social-networking system 160 may send a "friend request" to the second user. If the second user confirms the "friend request," social-networking system 160 may create an edge 206 connecting the first user's user node 202 to the second user's user node 202 in social graph 200 and store edge 206 as social-graph information in one or more of data stores 164. In the example of FIG. 2, social graph 200 includes an edge 206 indicating a friend relation between user nodes 202 of user "A" and user "B" and an edge indicating a friend relation between user nodes 202 of user "C" and user "B." Although this disclosure describes or illustrates particular edges 206 with particular attributes connecting particular user nodes 202, this disclosure contemplates any suitable edges 206 with any suitable attributes connecting user nodes 202. As an example and not by way of limitation, an edge 206 may represent a friendship, family relationship, business or employment relationship, fan relationship, follower relationship, visitor relationship, subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 200 by one or more edges 206.

In particular embodiments, an edge 206 between a user node 202 and a concept node 204 may represent a particular action or activity performed by a user associated with user node 202 toward a concept associated with a concept node 204. As an example and not by way of limitation, as illustrated in FIG. 2, a user may "like," "attended," "played," "listened," "cooked," "worked at," or "watched" a concept, each of which may correspond to an edge type or subtype. A concept-profile page corresponding to a concept node 204 may include, for example, a selectable "check in" icon (such as, for example, a clickable "check in" icon) or a selectable "add to favorites" icon. Similarly, after a user clicks these icons, social-networking system 160 may create a "favorite" edge or a "check in" edge in response to a user's action corresponding to a respective action. As another example and not by way of limitation, a user (user "C") may listen to a particular song ("Imagine") using a particular application (SPOTIFY, which is an online music application). In this case, social-networking system 160 may create a "listened" edge 206 and a "used" edge (as illustrated in FIG. 2) between user nodes 202 corresponding to the user and concept nodes 204 corresponding to the song and application to indicate that the user listened to the song and used the application. Moreover, social-networking system 160 may create a "played" edge 206 (as illustrated in FIG. 2) between concept nodes 204 corresponding to the song and the application to indicate that the particular song was played by the particular application. In this case, "played" edge 206 corresponds to an action performed by an external application (SPOTIFY) on an external audio file (the song "Imagine"). Although this disclosure describes particular edges 206 with particular attributes connecting user nodes 202 and concept nodes 204, this disclosure contemplates any suitable edges 206 with any suitable attributes connecting user nodes 202 and concept nodes 204. Moreover, although this disclosure describes edges between a user node 202 and a concept node 204 representing a single relationship, this disclosure contemplates edges between a user node 202 and a concept node 204 representing one or more relationships. As an example and not by way of limitation, an edge 206 may represent both that a user likes and has used at a particular concept. Alternatively, another edge 206 may represent each type of relationship (or multiples of a single relationship) between a user node 202 and a concept node 204 (as illustrated in FIG. 2 between user node 202 for user "E" and concept node 204 for "SPOTIFY").

In particular embodiments, social-networking system 160 may create an edge 206 between a user node 202 and a concept node 204 in social graph 200. As an example and not by way of limitation, a user viewing a concept-profile page (such as, for example, by using a web browser or a special-purpose application hosted by the user's client system 130) may indicate that he or she likes the concept represented by the concept node 204 by clicking or selecting a "Like" icon, which may cause the user's client system 130 to send to social-networking system 160 a message indicating the user's liking of the concept associated with the concept-profile page. In response to the message, social-networking system 160 may create an edge 206 between user node 202 associated with the user and concept node 204, as illustrated by "like" edge 206 between the user and concept node 204. In particular embodiments, social-networking system 160 may store an edge 206 in one or more data stores. In particular embodiments, an edge 206 may be automatically formed by social-networking system 160 in response to a particular user action. As an example and not by way of limitation, if a first user uploads a picture, watches a movie, or listens to a song, an edge 206 may be formed between user node 202 corresponding to the first user and concept nodes 204 corresponding to those concepts. Although this disclosure describes forming particular edges 206 in particular manners, this disclosure contemplates forming any suitable edges 206 in any suitable manner.

In particular embodiments, social-networking system 160 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 170 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, social-networking system 160 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part a the history of the user's actions. Coefficients may be used to predict any number of actions, which may be within or outside of the online social network. As an example and not by way of limitation, these actions may include various types of communications, such as sending messages, posting content, or commenting on content; various types of a observation actions, such as accessing or viewing profile pages, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, social-networking system 160 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the social-networking system 160 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, social-networking system 160 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, social-networking system 160 may calculate a coefficient based on a user's actions. Social-networking system 160 may monitor such actions on the online social network, on a third-party system 170, on other suitable systems, or any combination thereof. Any suitable type of user actions may be tracked or monitored. Typical user actions include viewing profile pages, creating or posting content, interacting with content, tagging or being tagged in images, joining groups, listing and confirming attendance at events, checking-in at locations, liking particular pages, creating pages, and performing other tasks that facilitate social action. In particular embodiments, social-networking system 160 may calculate a coefficient based on the user's actions with particular types of content. The content may be associated with the online social network, a third-party system 170, or another suitable system. The content may include users, profile pages, posts, news stories, headlines, instant messages, chat room conversations, emails, advertisements, pictures, video, music, other suitable objects, or any combination thereof. Social-networking system 160 may analyze a user's actions to determine whether one or more of the actions indicate an affinity for subject matter, content, other users, and so forth. As an example and not by way of limitation, if a user may make frequently posts content related to "coffee" or variants thereof, social-networking system 160 may determine the user has a high coefficient with respect to the concept "coffee". Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile page for the second user.

In particular embodiments, social-networking system 160 may calculate a coefficient based on the type of relationship between particular objects. Referencing the social graph 200, social-networking system 160 may analyze the number and/or type of edges 206 connecting particular user nodes 202 and concept nodes 204 when calculating a coefficient. As an example and not by way of limitation, user nodes 202 that are connected by a spouse-type edge (representing that the two users are married) may be assigned a higher coefficient than a user nodes 202 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in first photo, but merely likes a second photo, social-networking system 160 may determine that the user has a higher coefficient with respect to the first photo than the second photo because having a tagged-in-type relationship with content may be assigned a higher weight and/or rating than having a like-type relationship with content. In particular embodiments, social-networking system 160 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, social-networking system 160 may determine that the first user should also have a relatively high coefficient for the particular object. In particular embodiments, the coefficient may be based on the degree of separation between particular objects. The lower coefficient may represent the decreasing likelihood that the first user will share an interest in content objects of the user that is indirectly connected to the first user in the social graph 200. As an example and not by way of limitation, social-graph entities that are closer in the social graph 200 (i.e., fewer degrees of separation) may have a higher coefficient than entities that are further apart in the social graph 200.

In particular embodiments, social-networking system 160 may calculate a coefficient based on location information. Objects that are geographically closer to each other may be considered to be more related or of more interest to each other than more distant objects. In particular embodiments, the coefficient of a user towards a particular object may be based on the proximity of the object's location to a current location associated with the user (or the location of a client system 130 of the user). A first user may be more interested in other users or concepts that are closer to the first user. As an example and not by way of limitation, if a user is one mile from an airport and two miles from a gas station, social-networking system 160 may determine that the user has a higher coefficient for the airport than the gas station based on the proximity of the airport to the user.

In particular embodiments, social-networking system 160 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, social-networking system 160 may provide information that is relevant to user's interests and current circumstances, increasing the likelihood that they will find such information of interest. In particular embodiments, social-networking system 160 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, social-networking system 160 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results page than results corresponding to objects having lower coefficients.

In particular embodiments, social-networking system 160 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 170 (e.g., via an API or other communication channel), or from another suitable system. In response to the request, social-networking system 160 may calculate the coefficient (or access the coefficient information if it has previously been calculated and stored). In particular embodiments, social-networking system 160 may measure an affinity with respect to a particular process. Different processes (both internal and external to the online social network) may request a coefficient for a particular object or set of objects. Social-networking system 160 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, U.S. Patent Application No. 12/978265, filed 23 December 2010, and U.S. Patent Application No. 13/632869, field 01 October 2012, each of which is incorporated by reference.

In particular embodiments, a user of client system 130 may interact with the social-networking system 160 via an application, such as web browser 132 or a dedicated application of client system 130, to perform operations such as browsing content, posting and sending communications, retrieving and sorting communications received from other users, and the like. Communications may be in any suitable format such as electronic mail ("e-mail") messages, instant message (IM) or chat messages, comments left on a user's webpage, Multimedia Message Service (MMS) messages, and Short Message Service (SMS) or text messages. Messages may contain text or other content such as pictures, videos, sounds, links, or attachments. Each user may, for example, have a mailbox on the social-networking system that includes communications of various types that are both sent and received by the user.

Client system 130 may also interact with other client systems through network 110 (which may, for example, be wired or wireless). For example, client system 130 may participate in VoIP or non-VoIP calls with other cellular phones, computers, landlines, or other communication devices, send and receive texts or multi-media messages through the SMS or MMS channels, or receive push notifications through the SMS control channel.

Third party services may interact with social-networking system 160 via an application programming interface (API). For example, a third party system (including, e.g., a website) may perform operations supported by an API, such as delivering user communications to social-networking system 160, retrieving user communications stored by social-networking system 160, and obtaining social information about users of social-networking system 160.

Social-networking system 160 may enable users to interact with each other through the system. Social-networking system 160 may create and store a record, often referred to as a user profile, for each user. The user profile may include a user's contact information, background information, employment information, demographic information, personal interests, or other suitable information. Social-networking system 160 may also create and store a record of a user's relationship with other users in social-networking system 160. In particular embodiments, this information may be stored as a social graph, as described herein. In the social graph, individuals, groups, entities, or organizations may be represented as nodes in the graph, and the nodes may be connected by edges that represent one or more specific types of interdependency. Social-networking system 160 may also provide services (e.g., wall-posts, photo-sharing, event organization, messaging, games, or advertisements) to facilitate social interaction between users in the social-networking system 160. Social-networking system 160 may provide content and communications related to its services to a user's client system 130 over network 110.

In particular embodiments, one or more servers 162 or data stores 164 of the social-networking system 160 may together form a mailbox module. The mailbox module of social-networking system 160 may provide functionality for powering the messaging system of social-networking system 160. In a particular embodiment, the mailbox module receives, organizes, and presents communications to or from users in the social-networking system 160 via an interactive user interface. The interactive user interface may be, for example, a webpage that is viewed by a user with a web browser or a dedicated application residing on the user's computing device (e.g. client system 130). In particular embodiments, the interactive user interface may be a combination of server- and client-side rendering, depending on processing and bandwidth capacity. Functionality provided by the mailbox module may include organizing users into groups for messaging, organizing communications into conversations, quick reply, categorizing conversations, conversation states, conversation searching, new message notification, formatting of e-mails, forwarding communications between conversations, and invitation-based conversation, etc. In particular embodiments, communications occurring outside of the social-networking system 160 may be aggregated with communications occurring through the social-networking system by the mailbox module at any suitable time, such as when a client system 130 performs an aggregation operation. In particular embodiments, communications requiring interaction with third-party services are pulled automatically through one or more APIs and stored by the mailbox module (e.g. on one or more servers 162 or data stores 164 of the social-networking system 160). In particular embodiments, a mixture of client-push and serverpulls are used to aggregate communications from various sources at the mailbox module. In particular embodiments, a local application on a client system 130 performs one or more of the operations of the mailbox module and pulls communications from social-networking system 160 and third-party services to client system 130.

As described herein, a user of a client system (e.g. client system 130) may send a message to another user or receive a message from another user via social-networking system 160. A message may be of any suitable communication type (e.g. e-mail, SMS message, MMS message, and chat message). Furthermore, a single user may be associated with multiple client systems 130 that allow the user to send and receive messages via social-networking system 160. In particular embodiments, all of the messages between a first user and a second user sent and received via social-networking system 160 (regardless of which client system either user is using or what type of message either user is sending or receiving) may be organized by conversation (e.g. by a mailbox module). For example, a conversation between User A and User B may include all IMs, voice calls or videoconferences (including, e.g., logs of call-related data or transcripts of calls), e-mails, MMS messages, and SMS messages sent and received between User A and User B. User A and User B may, for example, both be associated with social-networking system 160, or only one of User A and User B may be associated with social-networking system 160.

In particular embodiments, a social-networking system (e.g. social-networking system 160) may provide availability information associated with a user of the social-networking system. For example, the availability of a particular user may be indicated to other users of the social-networking system using an indicator in a graphical user interface (e.g. of a messaging application associated with the social-networking system). The availability of a user may, in particular embodiments, be assessed based on the user's reachability, the user's willingness to communicate, or a combination of the two, to be described in further detail below.

A user's reachability may, in particular embodiments, be determined by one or more factors associated with the ability to contact the user via one or more devices associated with the user. An example factor for determining a user's reachability may include how many devices associated with the user (e.g. devices from which the user has accessed the social-networking system, sent messages, or received messages) are connected to the social-networking system (e.g. to back-end messaging functionality of the social-networking system, including a mailbox module). If, for example, no devices associated with a user are connected to the social-networking system, then the user may not be reachable. If, however, at least one device associated with the user is connected to the social-networking system, the user may be considered reachable, and if multiple devices associated with the user are connected to the social-networking system, the user's reachability may be determined to be high. Another example factor for determining a user's reachability may include the characteristics or capabilities of those devices associated with the user and presently connected to the social-networking system. For example, if a user's mobile phone lacking a camera is connected to the social-networking system (but no other devices associated with the user are connected to the social-networking system), then the user may be considered reachable for texts, IMs or chat messages, or voice calls, but not for videoconferences. If a user's mobile phone with a camera is connected to the social-networking system (and no other devices of the user include cameras), the user may only be reachable for videoconferences when the user is on a Wi-Fi network (e.g. due to bandwidth usage constraints), but the user may be considered to be, overall, more reachable than if she had no devices with camera capabilities connected to the social-networking system. In contrast, if a tablet or laptop associated with the user is presently connected to the social-networking system, then the user may be reachable via chat messages, voice calls, videoconferences, document transfers, etc., and the user's reachability may be determined to be high. Any suitable device capabilities or characteristics including, for example, device hardware, device software (e.g. browser functionality), peripherals connected to a device, device battery life, device processing load, the type of network the device is connected to when accessing the social-networking system, or the connection quality of the device's network connection (e.g. heavy traffic or high latency, or low latency) may all be considered when determining a user's reachability. Another example factor for determining a user's reachability may include the user's proximity to devices presently connected to the social-networking system. A user's proximity to a device may be determined, for example, based on proximity sensor readings (e.g. measurements of a user's distance from a device), the time elapsed since the device was last used by the user (e.g. time elapsed since a screen of the device was last turned on), or the level of interaction presently occurring on the device (e.g. whether the device is actively being used, whether a screen of the device is on, whether a particular application such as a browser of the device is being used, etc.). In some embodiments, a particular device associated with a user may be determined the "most active" device of the user connected to the social-networking system, and the capabilities or characteristics of the "most active" device may be weighed more heavily than those of other devices of the user connected to the social-networking system when determining the user's reachability. In particular embodiments, a user's reachability may be determined as a function of a single device associated with the user (e.g. a "most active" device), multiple devices associated with the user (e.g. all devices connected to the social-networking system), a single application of interest (e.g. the reachability of the user with respect to a videoconference application), multiple applications, or any other suitable combination thereof. Furthermore, any suitable combination of any of the factors described herein may be used to determine a user's reachability. Additionally, in particular embodiments, the social-networking system or an application on a device may instruct the device to always maintain a connection with the social-networking system, such as, for example, an "always up" TCP connection (employing, e.g., Message Queue Telemetry Transport) and to refresh this TCP connection as often as possible (within device constraints such as battery life or bandwidth availability).

A user's willingness to communicate may, in particular embodiments, be determined by one or more factors. In particular embodiments, a user's willingness to communicate may be determined based on the types of devices associated with the user that are presently connected to the social-networking system, as well as the states of one or more of these devices. As an example, if a browser of a laptop associated with the user is connected to the social-networking system (and no mobile phones associated with the user are connected to the social-networking system), then the state of the laptop may be used to determine the user's willingness to communicate. If, for example, the laptop is in an unlocked state (in which the screen saver is not activated), it may be determined that the user is willing to communicate. If, for example, the laptop is in an idle or locked state (e.g. because the user is away from the laptop and potentially busy), it may be determined that the user is less willing (or unwilling) to communicate. In the case of a mobile phone, however, the phone may be unlocked and active for large periods of time (e.g. when the user is browsing the Internet, making calls, etc.) but the user of the phone may not necessarily be willing to receive communications from other users.

In particular embodiments, a user's willingness to communicate may be determined from one or more signals including, for example, time of day, day of the week, the user's location (e.g. GPS latitude and longitude), the user's past conversation statistics, game or media consumption by the user, applications currently being used by the user, or explicit signals from the user regarding willingness to communicate. A user's willingness to communicate during sleeping hours on a weekday (determined, e.g., by patterns of phone idle times or charging times) may be low, whereas the user's willingness to communicate during early evening hours (e.g. after working hours and before sleeping hours) or on a weekend day may be relatively higher. As another example, a user's willingness to communicate while at work (determined, e.g., by patterns in the user's location data collected over time) may be very low, whereas the user's willingness to communicate while at home or at a restaurant or bar may be high. As another example, the user's historical conversation statistics (e.g. whether a user initiates sending messages, whether the user responds to messages, the number of messages the user has responded to, the duration of conversations, the density of the user's conversations compared to an average conversation density, etc.) during a particular time of day or day of the week or while at a particular location may also help determine the user's willingness to communicate. As another example, the user's consumption of games, audio, video, or other media may also indicate that the user is relatively unwilling to communicate. The number or types of applications currently being used by the user may help determine the user's willingness to communicate. As an example, a user who is actively using productivity software (e.g. a text editor, presentation editor, or spreadsheet editor) or a code development environment may be less willing (or unwilling) to communicate. However, a user who is actively using a web browser may have a high willingness to communicate. A user who is interacting with many applications (or, alternatively, few applications) may be less willing to communicate. A user's willingness to communicate at a given moment may be determined by an explicit indication by the user. The user may, for example, set a flag or a communication status indicator to indicate one of multiple states including, e.g., "Do Not Disturb," "On Phone," "Available to Chat," etc. In particular embodiments, the social-networking system may set a flag or a communication status indicator indicating the user's state (determined, e.g., based on one or more factors described herein). In particular embodiments, a user's communication status may automatically expire after a pre-determined, adjustable time period (e.g. 2 hours). The user may also be able to clear any set flags or communication status indicators. An explicit indication by the user (e.g. a user-set flag or communication status indicator) may, for example, override a willingness to communicate for the user or a state of the user that is determined automatically by the social-networking system.

In particular embodiments, a user's willingness to communicate may be calculated specifically with respect to another user. As an example, a user's general willingness to communicate (e.g. not specific to another user) may be determined based on one or more factors (e.g. those described herein), and then this general willingness to communicate may be adjusted based on one or more additional factors related to the user's relationship to another user. For example, User1's general willingness to communicate may be high (e.g. it may be daytime during a weekend day, when User1 historically responds to most incoming messages), but User1's specific willingness to communicate with User2 in particular may be very low, as determined from a variety of factors. Example factors used to determine the adjustment to a user's general willingness to communicate, in order to calculate the user's specific willingness to communicate with a particular other user, may include the type of relationship between the users, an affinity coefficient calculated between the users, statistics related to past conversations between the users (e.g. number of conversations, durations of conversations, initiators of conversations, responses given, conversation density, etc.), commonalities between the users, etc. For example, if User1 has a medium or high general willingness to communicate, this general willingness may be adjusted upward to arrive at User1's specific willingness to communicate with her spouse or other family member. However, User1's general willingness to communicate may be adjusted downward to arrive at User1's specific willingness to communicate with an acquaintance. As another example, User1's general willingness to communicate may be adjusted (e.g. either upward or downward) based on the affinity coefficient (described herein) calculated between User1 and another user. As another example, User1's general willingness to communicate may be adjusted upward for those users with whom User1 frequently interacts (e.g. via chat, text, or VoIP) and to whom User1 regularly responds (or regularly initiates conversations with), and it may be adjusted downward for those users with whom User1 rarely interacts (and to whom User1 sporadically or rarely responds). Similarly, User1's general willingness to communicate may be adjusted upward for those users with whom User1 has most-recently interacted, and may be adjusted downward for those users with whom User1 last interacted beyond a certain time threshold (e.g. more than one month ago). As another example, User1's general willingness to communicate may be adjusted upward for those users with whom User1 shares commonalities such as group membership, event attendance, photos or albums, comments or interactions (e.g. "likes") with particular posts, mutual friends, profile or photo views, search histories, notifications, etc. In particular embodiments, the adjustment to a user's general willingness to communicate (with respect to a particular other user) is performed as a scaling operation, such that a value calculated for the user's general willingness to communicate may be multiplied by a value calculated with respect to the particular other user to obtain the user's specific willingness to communicate with the other user.

In particular embodiments, data gathered (e.g. with respect to any of the factors described herein) from a client system 130 or from social-networking system 160 may be gathered real-time, on-demand or at any suitable frequency (e.g. every 15 minutes, every one hour, etc.) and the frequency may, for example, depend on device characteristics such as battery life or bandwidth consumption. Additionally, in particular embodiments, data (such as coefficient data or conversation history metrics) may be gathered or updated real-time, on demand, or every time a user's presence information changes, and these changes may be propagated to the availability indicated in the graphical user interface, described below. In particular embodiments, any suitable algorithm (including regression analysis, decision-tree analysis, neural-network analysis, expert-system analysis, or machine learning) may be used to determine which factors (including those described herein) should be used to predict a user's reachability or willingness to communicate and what weights those factors should be given. For example, data relating to what conversations a particular user entered (e.g. in response to incoming messages), how long those conversations lasted, to whom the user responded, and other conversation statistics may be used to better predict whether the user is reachable, generally willing to communicate, and specifically willing to communicate with a particular other user at a given moment in time. Any suitable algorithm may be used to synthesize the data related to the user's reachability and willingness to communicate to determine an overall measure of the user's availability with respect to a particular other user, which may be indicated to the other user in a graphical user interface. In connection with inferring a user's status based on one or more signals or data, particular embodiments may utilize one or more systems, components, elements, functions, methods, operations, or steps disclosed in U.S. Patent Application No. 13/722696, filed 20 December 2012 and U.S. Patent Application No. 13/656531, filed 19 October 2012, each of which is incorporated by reference.

In particular embodiments, a user's availability may be indicated to another user via a graphical user interface (e.g. associated with a messaging application of a social-networking system). In particular embodiments, different levels of availability may correspond to different statuses indicated in the graphical user interface. For example, if User1's availability with respect to User2 is relatively high, then User1 may be represented with a green dot status indicator. Accompanying the green dot status indicator may be additional indicators of sub-statuses including time online, time idle, location (with respect to User2), etc. For example, if User1 is connected to the social-networking system from a browser (and the device on which the browser is running is not locked or idle), then there may be no additional text accompanying the green dot. If, however, User1 is connected via a phone (and the phone screen was last turned on within a maximum number of minutes determined for User1), then there may be accompanying text that states "Connected from Phone" displayed with the green dot; this may indicate a slightly lower level of availability than a green dot alone. Additionally, if User1 has explicitly indicated a state of "Available to Chat," then text stating "Available to Chat" may be displayed along with the green dot, indicating a higher level of availability than the green dot alone. As another example, if User1's availability with respect to User2 is relatively low, then User1 may be represented with a yellow dot status indicator. Accompanying the yellow dot status indicator may be additional indicators of sub-statuses. For example, if User1 is connected to the social-networking system from a browser (and the device on which the browser is running is locked or idle), then there may be no additional text accompanying the yellow dot. If, however, User1 is connected via a phone (and the phone screen was last turned on more than a maximum number of minutes determined for User1), then there may be accompanying text that states "Connected from Phone" displayed with the yellow dot; this may indicate a slightly lower level of availability than a yellow dot alone. The yellow dot indicator may also display text that states how long User1 has been "idle". Additionally, if User1 has explicitly indicated a state of "Do Not Disturb," then text stating "Do Not Disturb" may be displayed along with the yellow dot, indicating that only urgent messages should be sent to User1. As another example, if User1 is unreachable (or otherwise unavailable), then User1 may be displayed with no dot-type status indicator. This may indicate that any messages to User1 may be delivered when User1 is again reachable. Any suitable combination of icons or text (and any suitable colors, shapes, or other formatting) may be employed by a graphical user interface to display availability information about one user to another.

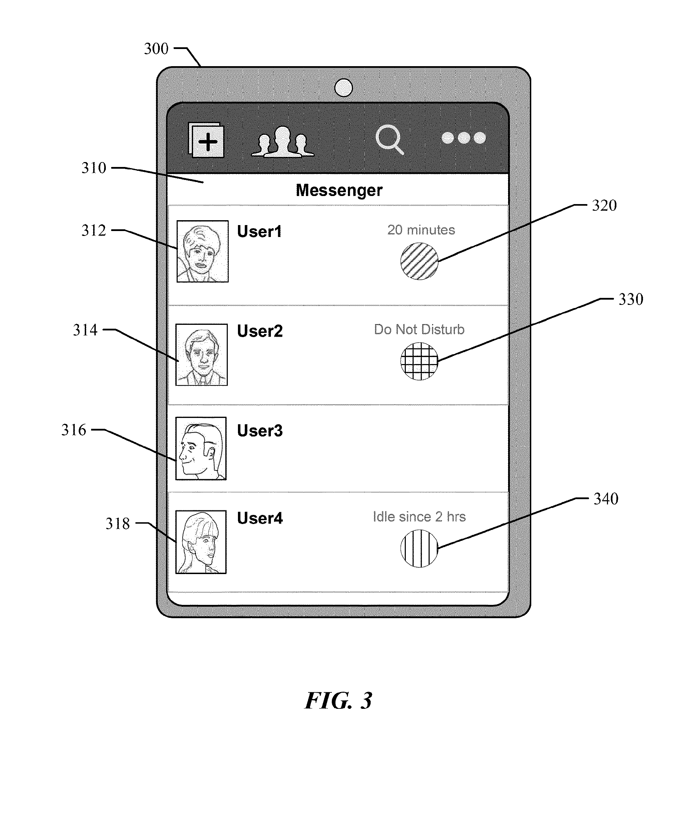

FIG. 3 illustrates an example graphical user interface for a messaging application associated with a social-networking system. In the example of Fig. 3, four different users and their associated availabilities are shown to the user of a mobile computing device 300. The graphical user interface for the messaging application 310 includes a list of the four users (e.g. ranked by their coefficient value calculated with respect to the user of the mobile computing device), their associated profile images and names (elements 312-318), dot-style status indicators (elements 320, 330, and 340), and text accompanying the dot-style status indicators. In this example, User1 is shown to the user of the mobile computing device as having a high availability (indicated by diagonal lines in dot-style indicator 320), and text indicating that User1 has been at this high availability level for 20 minutes is also displayed. User2 is shown to the user of the mobile computing device as having low availability (indicated by a grid of lines in dot-style indicator 330), reinforced by the "Do Not Disturb" text that accompanies the dot-style indicator and reflects the state that User2 has explicitly selected for his availability. User3 does not have any indicator of availability which, in this example, indicates that User3 is not currently reachable. User4 is shown to the user of the mobile computing device as having low availability (indicated by striped lines in dot-style indicator 340), and displayed along with the dot-style indicator is text showing that User4 has been idle (e.g. with low availability) since the past 2 hours.

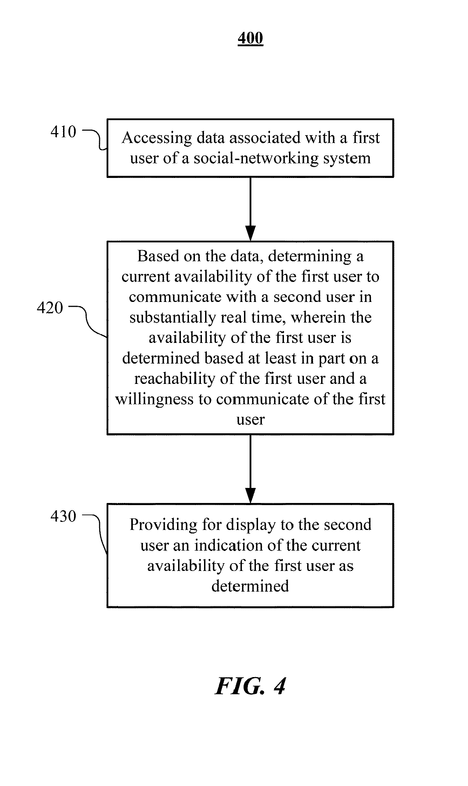

FIG. 4 illustrates an example method 400 for indicating user availability for communication. The method may begin at step 410, where data associated with a first user of a social-networking system is accessed. At step 420, based at least in part on the data, a current availability of the first user to communicate with the second user in substantially real time is determined. The availability of the first user is determined based at least in part on a reachability of the first user and a willingness to communicate of the first user. At step 430, an indication of the current availability of the first user as determined is provided for display to the second user. Particular embodiments may repeat one or more steps of the method of FIG. 4, where appropriate. Although this disclosure describes and illustrates particular steps of the method of FIG. 4 as occurring in a particular order, this disclosure contemplates any suitable steps of the method of FIG. 4 occurring in any suitable order. Moreover, although this disclosure describes and illustrates an example method for indicating user availability for communication including the particular steps of the method of FIG. 4, this disclosure contemplates any suitable method for indicating user availability for communication including any suitable steps, which may include all, some, or none of the steps of the method of FIG. 4, where appropriate. Furthermore, although this disclosure describes and illustrates particular components, devices, or systems carrying out particular steps of the method of FIG. 4, this disclosure contemplates any suitable combination of any suitable components, devices, or systems carrying out any suitable steps of the method of FIG. 4.

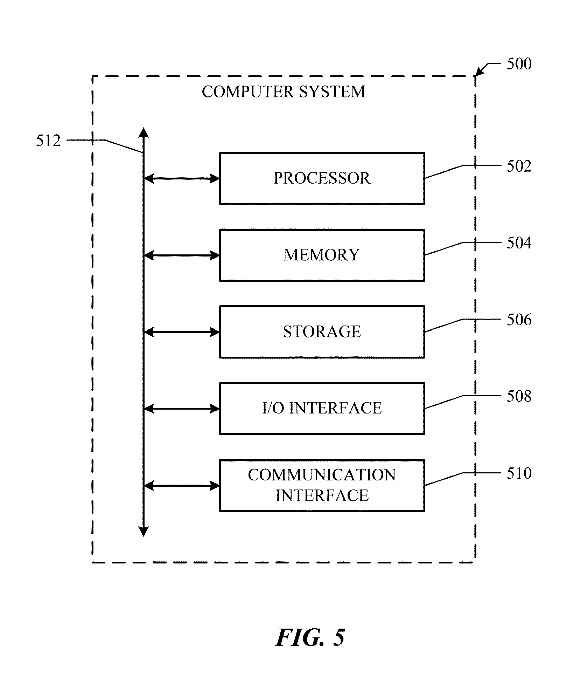

FIG. 5 illustrates an example computer system 500. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments include one or more portions of one or more computer systems 500. Herein, reference to a computer system may encompass a computing device, and vice versa, where appropriate. Moreover, reference to a computer system may encompass one or more computer systems, where appropriate.

This disclosure contemplates any suitable number of computer systems 500. This disclosure contemplates computer system 500 taking any suitable physical form. As example and not by way of limitation, computer system 500 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 500 may include one or more computer systems 500; be unitary or distributed; span multiple locations; span multiple machines; span multiple data centers; or reside in a cloud, which may include one or more cloud components in one or more networks. Where appropriate, one or more computer systems 500 may perform without substantial spatial or temporal limitation one or more steps of one or more methods described or illustrated herein. As an example and not by way of limitation, one or more computer systems 500 may perform in real time or in batch mode one or more steps of one or more methods described or illustrated herein. One or more computer systems 500 may perform at different times or at different locations one or more steps of one or more methods described or illustrated herein, where appropriate.

In particular embodiments, computer system 500 includes a processor 502, memory 504, storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In particular embodiments, processor 502 includes hardware for executing instructions, such as those making up a computer program. As an example and not by way of limitation, to execute instructions, processor 502 may retrieve (or fetch) the instructions from an internal register, an internal cache, memory 504, or storage 506; decode and execute them; and then write one or more results to an internal register, an internal cache, memory 504, or storage 506. In particular embodiments, processor 502 may include one or more internal caches for data, instructions, or addresses. This disclosure contemplates processor 502 including any suitable number of any suitable internal caches, where appropriate. As an example and not by way of limitation, processor 502 may include one or more instruction caches, one or more data caches, and one or more translation lookaside buffers (TLBs). Instructions in the instruction caches may be copies of instructions in memory 504 or storage 506, and the instruction caches may speed up retrieval of those instructions by processor 502. Data in the data caches may be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches may speed up read or write operations by processor 502. The TLBs may speed up virtual-address translation for processor 502. In particular embodiments, processor 502 may include one or more internal registers for data, instructions, or addresses. This disclosure contemplates processor 502 including any suitable number of any suitable internal registers, where appropriate. Where appropriate, processor 502 may include one or more arithmetic logic units (ALUs); be a multi-core processor; or include one or more processors 502. Although this disclosure describes and illustrates a particular processor, this disclosure contemplates any suitable processor.

In particular embodiments, memory 504 includes main memory for storing instructions for processor 502 to execute or data for processor 502 to operate on. As an example and not by way of limitation, computer system 500 may load instructions from storage 506 or another source (such as, for example, another computer system 500) to memory 504. Processor 502 may then load the instructions from memory 504 to an internal register or internal cache. To execute the instructions, processor 502 may retrieve the instructions from the internal register or internal cache and decode them. During or after execution of the instructions, processor 502 may write one or more results (which may be intermediate or final results) to the internal register or internal cache. Processor 502 may then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which may each include an address bus and a data bus) may couple processor 502 to memory 504. Bus 512 may include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. This disclosure contemplates any suitable RAM. Memory 504 may include one or more memories 504, where appropriate. Although this disclosure describes and illustrates particular memory, this disclosure contemplates any suitable memory.

In particular embodiments, storage 506 includes mass storage for data or instructions. As an example and not by way of limitation, storage 506 may include a hard disk drive (HDD), a floppy disk drive, flash memory, an optical disc, a magneto-optical disc, magnetic tape, or a Universal Serial Bus (USB) drive or a combination of two or more of these. Storage 506 may include removable or non-removable (or fixed) media, where appropriate. Storage 506 may be internal or external to computer system 500, where appropriate. In particular embodiments, storage 506 is non-volatile, solid-state memory. In particular embodiments, storage 506 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 may include one or more storage control units facilitating communication between processor 502 and storage 506, where appropriate. Where appropriate, storage 506 may include one or more storages 506. Although this disclosure describes and illustrates particular storage, this disclosure contemplates any suitable storage.

In particular embodiments, I/O interface 508 includes hardware, software, or both, providing one or more interfaces for communication between computer system 500 and one or more I/O devices. Computer system 500 may include one or more of these I/O devices, where appropriate. One or more of these I/O devices may enable communication between a person and computer system 500. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 508 for them. Where appropriate, I/O interface 508 may include one or more device or software drivers enabling processor 502 to drive one or more of these I/O devices. I/O interface 508 may include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer systems 500 or one or more networks. As an example and not by way of limitation, communication interface 510 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 500 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 may include any suitable communication interface 510 for any of these networks, where appropriate. Communication interface 510 may include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 may include an Accelerated Graphics Port (AGP) or other graphics bus, an Enhanced Industry Standard Architecture (EISA) bus, a front-side bus (FSB), a HY-PERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 may include one or more buses 512, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

## Claims

1. A method comprising:
by a computing device, accessing data associated with a first user of a social-networking system and stored in a social-graph database of the social-networking system;
by the computing device, based at least in part on the data, determining a current availability of the first user to communicate with a second user of the social-networking system in substantially real time, wherein the availability of the first user is determined based at least in part on a reachability of the first user and a willingness to communicate of the first user;
wherein the reachability of the first user is determined based on a substantially real time gathering of information from a device of the first user, which can be stored in the social-graph database;
wherein the willingness to communicate of the first user is determined based on a pattern detection using historical data from the device of the first user and/or previous behavior of the first user stored in the social-graph database and could be overwritten by a user-set and/or application-set flag and/or an explicit signal provided by the first user; and
by the computing device, providing for display to the second user an indication of the current availability of the first user as determined.

2. The method of Claim 1, wherein the willingness to communicate of the first user is determined with respect to the second user.

3. The method of Claim 1 or 2, wherein the reachability of the first user is determined based at least in part on one or more of the following:
connectivity to the social-networking system of one or more devices associated with the first user;
types of one or more devices associated with the first user;
proximity of the first user to one or more devices associated with the first user; or
characteristics or capabilities of one or more devices associated with the first user.

4. The method of any of Claims 1 to 3, wherein the willingness to communicate of the first user is determined based at least in part on one or more of the following:
a state of one or more devices associated with the first user;
a current time of day;
a location of the first user;
a conversation history of the first user;
types of one or more applications used by the first user; or
an explicit signal provided by the first user.

5. The method of Claim 4, wherein the willingness to communicate of the first user is adjusted based at least in part on one or more of the following:
a relationship between the first user and the second user;
an affinity coefficient calculated between the first user and the second user;
a conversation history between the first user and the second user; or
commonalities between the first user and the second user.

6. The method of any of Claims 1 to 5, wherein the availability of the first user is determined using machine learning feedback based at least in part on a conversation history of the first user.

7. The method of any of Claims 1 to 6, wherein the indication of the current availability of the first user comprises an icon with accompanying text.

8. One or more computer-readable non-transitory storage media embodying software that is operable when executed to perform a method according to any of Claims 1 to 7.

9. A system comprising: one or more processors; and a memory coupled to the processors comprising instructions executable by the processors, the processors operable when executing the instructions to perform a method according to any of the Claims 1 to 7.
